# EUROPEAN PATENT SPECIFICATION

(11) **EP 2 235 983 B1**
(45) Date of publication and mention of the grant of the patent: **20.07.2011**
(21) Application number: 08863682.4
(22) Date of filing: 17.12.2008
(51) Int. Cl.: H04W 36/08

(54) **METHOD, APPARATUS AND COMPUTER PROGRAM FOR HANDOVER FROM A FIRST ACCESS POINT TO A SECOND ACCESS POINT**
VERFAHREN, VORRICHTUNG UND COMPUTERPROGRAMM ZUM HANDOVER VON EINEM ERSTEN ZUGANGSPUNKT AN EINEN ZWEITEN ZUGANGSPUNKT
PROCEDE, APPAREIL ET PROGRAMME D'ORDINATEUR POUR LE TRANSFERT D'UN PREMIER POINT D'ACCES A UN SECOND POINT D'ACCES

(30) Priority: 21.12.2007 EP 07024953
(43) Date of publication of application: 06.10.2010
(73) Proprietor: Telefonaktiebolaget LM Ericsson (publ), 164 83 Stockholm (SE)
(72) Inventor: SANSONE, Carlo, I-00040 Ariccia (RM) (IT)
(74) Representative: Pfeifer, Torsten
(86) International application number: PCT/EP2008/067734
(87) International publication number: WO 2009/080649

(56) References cited:
- US-A1- 2003 228 868
- US-A1- 2007 160 047
- SEOK J KOH KYUNGPOOK NATIONAL UNIVERSITY QIAOBING XIE MOTOROLA SOOHONG DANIEL PARK SAMSUNG ELECTRONICS: "Mobile SCTP (mSCTP) for IP Handover Support; draft-sjkoh-msctp-01.txt" IETF STANDARD-WORKING-DRAFT, INTERNET ENGINEERING TASK FORCE, IETF, CH, no. 1, 1 October 2005 (2005-10-01), pages 1-19, XP015040113 ISSN: 0000-0004

## Description

### Technical field

The present invention relates to improvements in or relating to wireless mobility particularly, but not exclusively, in relation to handover techniques in the Internet protocol (IP) environment.

### Background

Current network protocols work on the basis of a model including a number of different layers. In a typical network these layers are called:
1. the physical layer;
2. the data link layer;
3. the network layer;
4. the transport layer; and
5. the application layer.

In current wireless local area networks (WLAN) and WiMax (Worldwide Interoperability for Microwave Access) networks.support for any mobility is limited to a technique known as "micro-mobility". This means that the mobility is limited to areas belonging to the same IP subnet, i.e. having an IP address from the same range of logical addresses and is thus based on layer 2 handovers. Mobility between two or more IP subnets and based on layer 3 handovers has proved to be more problematic to solve at least in the WLAN and WiMax networks.

Mobility in an IP domain relies on a home agent (HA) node contacting mobile nodes (MN) while they are outside the home network. When the mobile node is outside the home network, it informs the home agent of the IP address where the mobile node is contactable. The home agent may then intercept any IP packets destined for the mobile node and redirect them to the IP address that the mobile node has indicated. The packets are redirected by an IP tunnelling processes.

Similarly, for a session initiated protocol (SIP) environment, mobility is based on notifying peer nodes of the new IP address and then sending IP packets to the new IP address.

A number of problems exist with both IP and SIP mobility. Firstly IP mobility has a so-called "triangular routing" problem and a loading problem relating to the home agent. The triangular routing problem relates to packets that are sent to a mobile network being first routed to a mobile network's home subnet. Packets that are sent in the opposite direction are not handled in this way and are sent straight to their destination. As a result IP addresses are not consistent and can cause problems. With regard to the loading problems the home agent must forward every packet to all mobile nodes that are roaming outside the home network, which clearly produces a high level of traffic that is very often completely unnecessary.

The problems relating to SIP mobility concern sessions that are already established when the handover occurs. For example, transmission control protocol (TCP) sessions do not survive a handover due to changes in the IP address as experienced by the transport layer (layer 4).
US 2007/0160047 describes a hand-off of a terminal from a first radio access station to a second radio access station. Initially, communication between the terminal and a counterpart terminal uses a first IP address assigned by the first radio station. When the terminal moves to an area served by the second radio access station, the terminal is assigned a second IP address. The address change is communicated to the counterpart terminal employing a multi-homing feature of mobile Stream Control Transport Protocol (mSTCP, for which further details can be obtained from Document "Mobile SCTP (mSCTP) for IP Handover Support; draft-sjkoh-msctp-01.txt", XP015040113) The counterpart terminal changes the address for communicating with the terminal from the first to the second IP address.

US 2003/0228868 describes a system having a mobile host which can attach to different access networks for carrying on an active communications session with a correspondent host. The mobile host has an identifier which is independent of the access network to which the mobile host is attached, but is assigned a communications address such as an IP Address for carrying on an active communications session with a correspondent host. The communications address can change, e.g. due to hand-over from a first wireless access network to a second. The current communications address is stored together with the identifier of the mobile host in a system database. When the mobile host detects a communication address change, it sends a message comprising said identifier to the corresponding host which in turn can request the current communications address from the system database.

### Summary

One object of the present invention is to provide a method and apparatus which overcomes at least some of the problems associated with the prior art.

A further object of the present invention is to provide for layer 3 mobility without requiring network support.

A still further object to the present invention is to provide transparency in the transport layer such that sessions that are already established are not impacted by an IP address change.

Another object to the present invention is to provide a solution based on end to end signalling and that will work for handovers between different access technologies.

The present invention provides a handover method according to claim 1 from a first access point to a second access point for a first node having a first original address in communication with a second node having a second original address, wherein the first and second nodes operate over a plurality of communication layers, each communication layer supporting one or more communication protocols. The method is remarkable in that it comprises:
- requesting a handover to the second access point from the first access point for the communication;
- determining a first new address for the first node based on the request for handover;
- notifying a change of address to the second node that enables the second node to route the communication using the first new address for one or more predetermined communication protocols. The present invention also provides a mobile node In accordance with claim 13 suitable to perform the invented method. Further advantageous embodiments are disclosed in the dependent claims.

### Advantageous embodiments

Embodiment 1) A handover method from a first access point to a second access point for a first node having a first original address in communication with a second node having a second original address, wherein the first and second nodes operate over a plurality of communication layers, each communication layer supporting one or more communication protocols, wherein the method Is remarkable in that it comprises:
   - requesting a handover to the second access point from the first access point for the communication;
   - determining a first new address for the first node based on the request for handover;
   - notifying a change of address to the second node that enables the second node to route the communication using the received first new address for one or more predetermined communication protocols.
Embodiment 2) A handover method as disclosed In embodiment 1 further comprising routing the communication using the first new address, such that on reception of the communication the second node recognizes the first original address of the communication for the one or more predetermined communication protocols.
Embodiment 3) A handover method as disclosed in embodiment 1 or 2, wherein routing includes translating the first original address to the first new address or vice versa.
Embodiment 4) A handover method as disclosed in any of the embodiment 1 - 3, further comprising determining a second new address for the second node and routing the communication using the second new address such that the first node recognizes the second original address of the communication and can translate the received second new address to the second original address for the one or more predetermined communication protocols.
Embodiment 5) A handover method as disclosed In any of the embodiments 1 - 4" further comprising identifying one or more existing sessions in the communication between the first and second nodes which require an original address to operate and translating a new address to the original address or vice versa for the said one or more existing sessions.
Embodiment 6) A handover method as disclosed in any of the embodiments 1 -5, further comprising translating the new address to the original address for any communication relating to the one or more predetermined communication protocols.
Embodiment 7) A handover method as disclosed in embodiments 6, further comprising communicating a new address to the first or second nodes, prior to routing the communication using the new address.
Embodiment 8) A handover method as disclosed in embodiment 7, wherein the step of communicating the new address further comprises communicating the original address.
Embodiment 9) A handover method as disclosed in any of the embodiments 1 - 8, further comprising identifying the one or more communication layers to which the one or more predetermined communication protocols belong and translating the new address to the original address or vice versa for all communications associated with the identified one or more communication layers.
Embodiment 10) A handover method as disclosed in any of the embodiments 1 - 9 , further comprising providing the communication layers in the form of a physical layer, a data link layer, a network layer, a transport layer, and an application layer.
Embodiment 11) A handover method as disclosed in embodiment 9, further comprising translating the new address (IP3; IP4) to the original address (IP1) for any communications in the transport layer.
Embodiment 12) A handover method as disclosed in embodiment 9 or embodiment 10, further comprising using the new address for any communication in the network layer.
Embodiment 13) A mobile node having a first original address and being connectable via a communication with a second node having a second original address, wherein the communication is effected via a first access point, wherein the first and second nodes operate over a plurality of communication layers, each communication layer supporting one or more communication protocols, wherein the mobile node comprises:
   - a handover module for identifying a different access point and requesting transfer of the communication from the first access point to the different access point, wherein the different access point requires a first new address for the mobile node for effecting the communication and wherein the mobile node further comprises
   - a sender for notifying a change of address to the second node that enables the second node to route the communication using the first new address for one or more predetermined communication protocols.
Embodiment 14) The mobile node as disclosed in embodiment 13 further comprising a communication module for routing the communication using the first new address, such that on reception of the communication the second node recognizes the first original address of the communication for the one or more predetermined communication protocols.
Embodiment 15) The mobile node as disclosed in embodiment 13 or 14, wherein the routing includes translating the first new address to the first original address or vice versa.
Embodiment 16) The mobile node as disclosed in any of the embodiments 13 to 15, further comprising a receiver for receiving from the second node a second new address for the second node and effecting the routing of the communication using the second new address, such that the communication module identifies the second original address of the communication and can translate the received second new address to the second original address for the one or more predetermined communication protocols.
Embodiment 17) The mobile node as disclosed in any of the embodiments 13 to 16, wherein one or more existing sessions in the communication between the first and second nodes are identified, which sessions require an original address to operate and wherein any new address is translated to the original address for the said one or more existing sessions.
Embodiment 18) The mobile node as disclosed in any of the embodiments 13 to 17, wherein the new address Is translated to the original address for any communication relating to the one or more predetermined communication protocols.
Embodiment 19) The mobile node as disclosed in any of the embodiments 13 to 18, wherein the new address is transmitted prior to routing the communication using the new address.
Embodiment 20) The mobile node as disclosed in embodiment 19, wherein the new address is transmitted with the original address.
Embodiment 21) The mobile node as disclosed In any of the embodiments 13 to 20, wherein the one or more communication layers used in the communication are identified.
Embodiment 22) The mobile node as disclosed in embodiment 21, wherein the one or more communication layers is associated with the one or more predetermined communication protocols and the new address is translated to the original address or vice versa for all communications associated with the identified one or more communication layers.
Embodiment 23) The mobile node as disclosed in any of the embodiments 13 to 22, wherein the communication layers comprises a physical layer, a data link layer, a network layer, a transport layer, and an application layer.
Embodiment 24) The mobile node as disclosed in embodiment 23, wherein the new address Iₛ translated to the original address for any communications in the transport layer.
Embodiment 25) The mobile node as disclosed In embodiment 23 or embodiment 24, wherein the new address in used for any communication in the network layer.

### Brief description of the drawings

Reference will now be made, by way of example, to the accompanying drawings, in which:
Figure 1 Iₛ a schematic diagram showing a first stage of a mobility process, In accordance with one embodiment of the invention, given by way of example;
Figure 2 is a schematic diagram showing a second stage of a mobility process, in accordance with one embodiment of the invention, given by way of example;
Figure 3 is a schematic diagram showing a third stage of a mobility process, in accordance with one embodiment of the invention, given by way of example;
Figure 4 is a schematic diagram showing a fourth stage of a mobility process, in accordance with one embodiment of the invention, given by way of example;
Figure 5 is a schematic diagram showing a first stage of a further mobility process, in accordance with one embodiment of the invention, given by way of example;
Figure 6 is a schematic diagram showing a second stage of a further mobility process, in accordance with one embodiment of the invention, given by way of example;
Figure 7 is a schematic diagram showing a third stage of a further mobility process, in accordance with one embodiment of the invention, given by way of example;
Figure 8 is a schematic diagram showing an fourth stage of a further mobility process, in accordance with one embodiment of the invention, given by way of example;
Figure 9 is a schematic diagram showing a fifth stage of a further mobility process, in accordance with one embodiment of the invention, given by way of example;
Figure 10 is a schematic diagram showing a sixth stage of a further mobility process, in accordance with one embodiment of the invention, given by way of example; and
Figure 11 is a flow chart showing the changes for source and destination addresses for the nodes and access points of a network, in accordance with one embodiment of the invention, given by way of example.
Figure 12 is a flow chart diagram showing a handover method in accordance with the teachings of the present invention

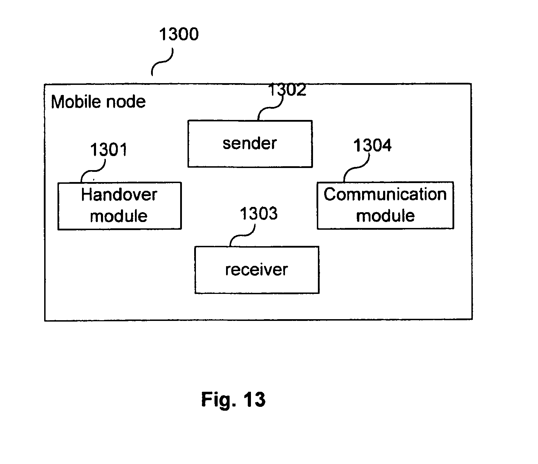

Figure 13 is block diagram showing a mobile network node structure in accordance with the teachings of the present invention.

### Detailed description

Common reference numbers are used throughout the specification for common elements and to avoid repetition, details of these common elements are not repeated with respect to each drawing if there is no additional information to include.

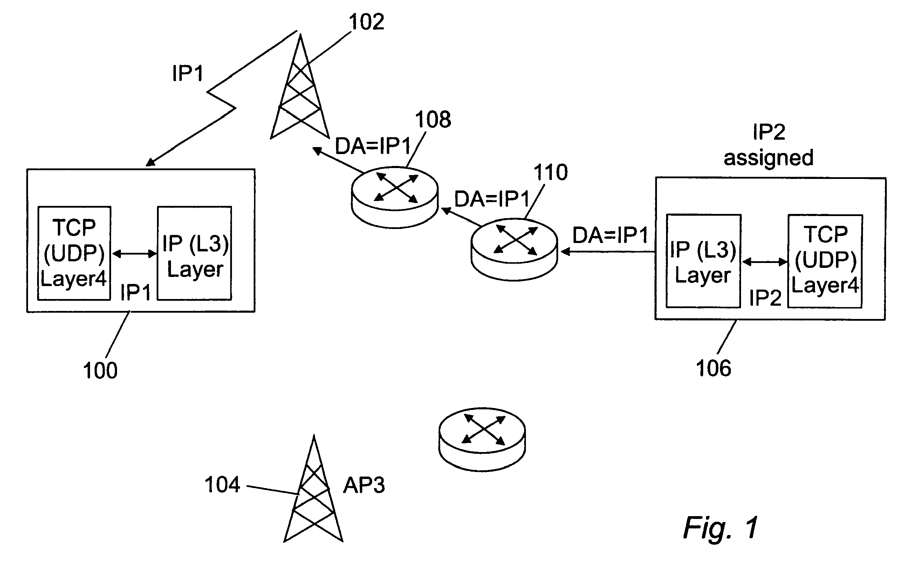

Referring initially to figure 1 a mobile node 100 is connected to an access point 102. The mobile node 100 is assigned an IP address IP1. Also in the vicinity of the mobile node is an access point 104. Due to the relative locations of access points 102 and 104, in the first instance, mobile node 100 prefers to be connected to access point 102. Established sessions at the transport layer, for example UDP (user datagram protocol) and/or TCP (Transmission Control Protocol) rely on the IP address IP1 at the network layer in the mobile node. A further node, referred to as a peer node 106, also has established sessions with the mobile node 100 at the transport layer. There may be a number of additional nodes, or routers, shown as 108 and 110, between the peer node 106 and the access point 102. The initials DA in the figures refer to the destination address and the initials SA to the source address. The TCP sessions between the mobile node 100 and peer node 106 occur between the IP address IP1 in the mobile node 100 and a second IP address IP2 in the peer node 106.

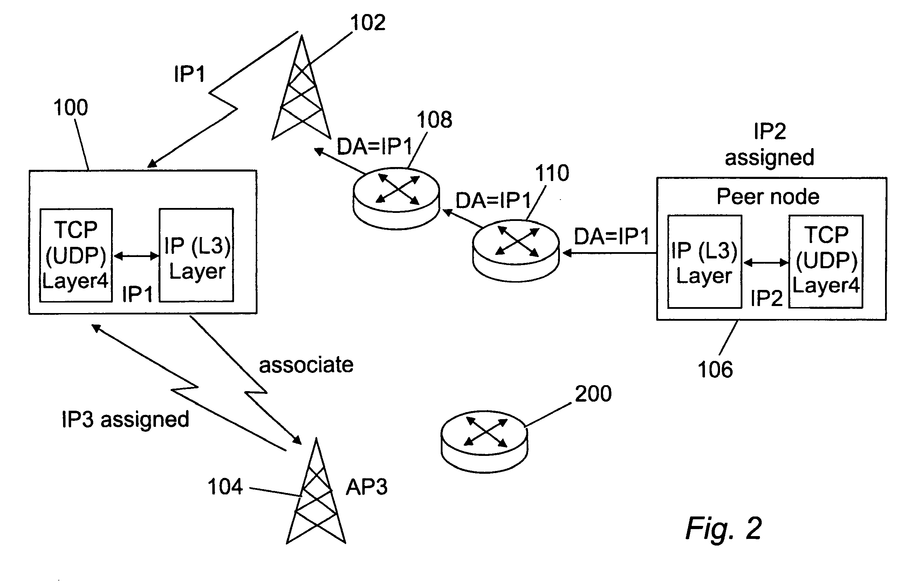

In figure 2, the mobile node 100 has moved to a position where there is better coverage by access point 104. The mobile node 100 is still also reachable by access point 102. Figure 2 shows some of the details relating to the initiation of a handover from access point 102 to access point 104. Access point 104 belongs to a different IP subnet than that of access point 102. The mobile node 100 associates with access point 104 and new IP address IP3 is set up and is used to access the IP network through access point 104. The association phase includes several signalling exchanges between the mobile node 100 and the new IP subnet (104), for example authorisation etc. Throughout the association phase the mobile node 100 remains connected to access point 102. Figure 2 also shows a further node 200, the function of which will be described in greater detail below.

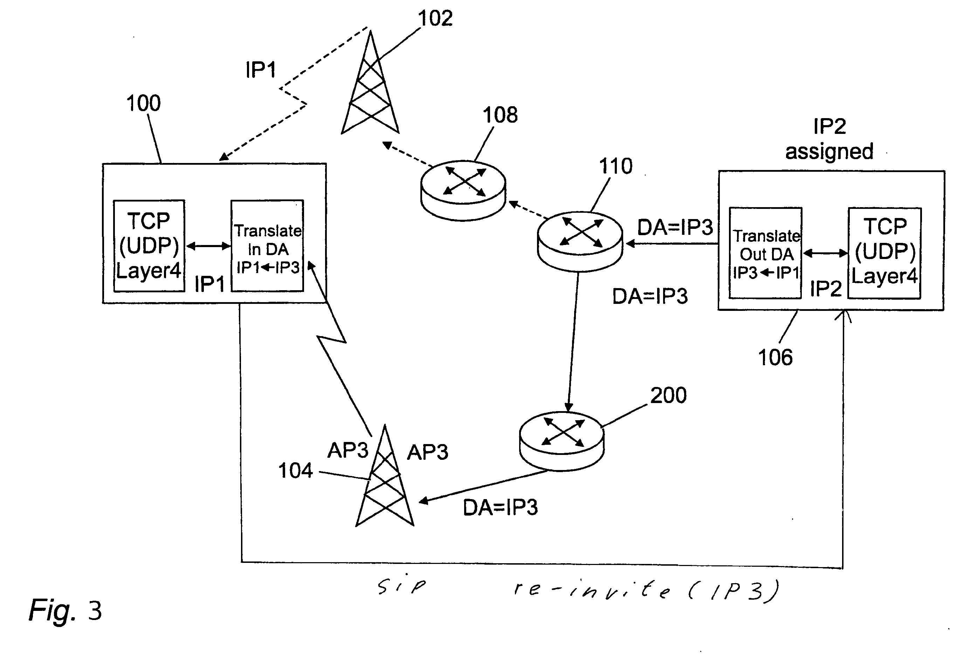

Referring now to figure 3, the handover implementation is described and shows how the network layer and the transport layer at both nodes of the network operate. The address assignments of the established transport layer sessions using IP1 at the mobile node 100 and IP2 at the peer node 106 are unaffected by the handover. A translation of the IP destination address (DA) in packets sent from the peer node 106 to the mobile node 100 is required in order to have packets which have an IPDA address that is coherent with the current location of the mobile node 100. If the IPDA address is not translated the packets sent towards the mobile node would still have an IP address IP1, whereas, in fact, the mobile node is now connected to access point 106 operating on IP address IP3. Accordingly, the IPDA address is translated from IP1 to IP3 in packets sent by the peer node 106, although as the mobile node is still in contact with the access point 102, this translation may be delayed until later if required. The IPDA is then translated to IP address IP1 by the mobile node 100, before delivery to the transport layer. This ensures that transparency is guaranteed in the transport layer.

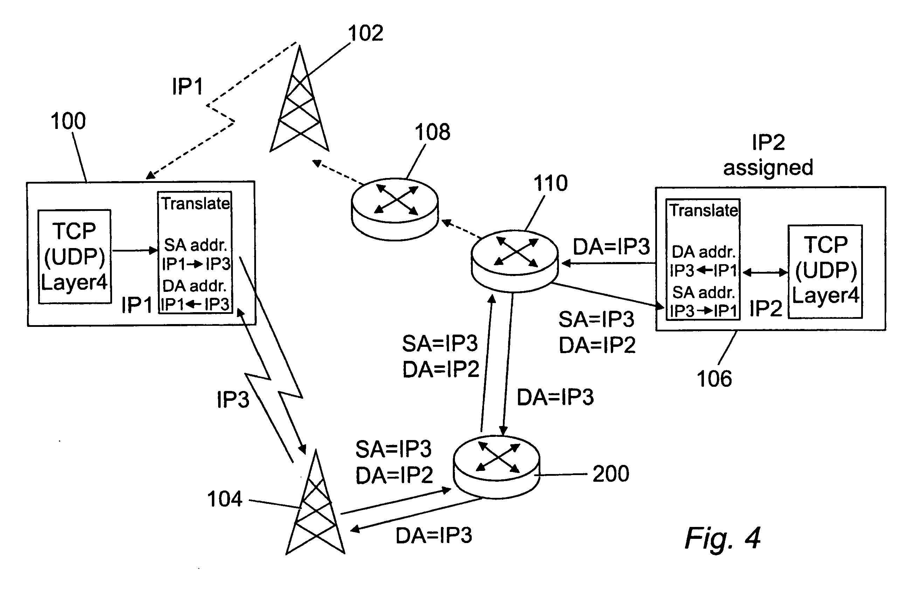

Figure 4 shows the address translations of both the source address and the destination address (DA). The DA address translation is provided in packets sent from the peer node 106 to the mobile node 100, and the SA address translation is provided in packets sent from mobile node 100 to peer node 106. In particular, a translation of the IP source address (SA) in packets sent from the mobile network 100 to the peer node 106 is required in order to have packets which have an IPSA address that is coherent with the current location of the mobile node 100. If the IPSA address is not translated the packets sent by the mobile node would still have an IP address IP1, whereas, in fact, the mobile network is now connected to access point 106 operating on IP address IP3. Accordingly, the IPSA address is translated from IP1 to IP3 in packets sent by the mobile node 100, although as the mobile node is still in contact with the access point 102, this translation may be delayed until later if required. The IPSA is then translated to IP address IP1 by the peer node 106, before delivery to the transport layer. This ensures that transparency is guaranteed in the transport layer. These translations occur after the handover operation is complete.

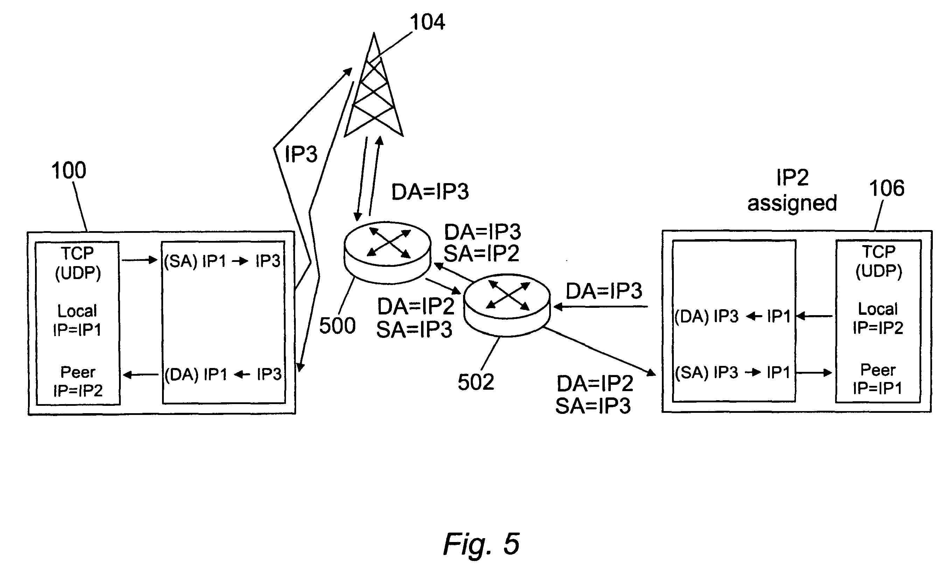

Figure 5 to Figure 10 show in greater detail the sequence of operation that take places in Layer 3 at both ends of the transmission (i.e. the mobile node 100 and the peer node 106 in the example presented) during a subsequent handover. Figures 5 to 10 also indicate the order in which the operations occur to avoid and/or minimise packet loss during the handover.

Figure 5 shows the initial picture, where the mobile node 100 is associated to wireless access point 104, and where the IP address IP3 is assigned to the mobile node 100 in the IP subnet, to which access point 104 belongs. It is assumed in Figure 5 that a handover has already occurred after sessions were established between IP address IP1 at mobile node 100 and IP address IP2 at peer node 106. As will be seen, the handover is treated in a similar way for subsequent handovers as for the first handover. The first handover entails the mobile node 100 passing the IP address from IP1 (in the IP subnet where the sessions were originally established) to IP3 in the current IP subnet. Thus, in both nodes the IP addresses are translated so that the original IP addresses when the sessions were established are used. IP packets leaving the mobile node 100 (belonging to sessions originally established on IP1) have their source addresses changed from IP1 to IP3. In the peer node 106 the same packets have their SA restored from IP3 to IP1, before being delivered to the transport layer. In the other direction, packets leaving the peer node 106 (belonging to sessions originally established on IP1 at mobile node) have their destination addresses changed from IP1 to IP3 (the DA address change from IP1 to IP3, occurring at the peer node 106, makes it possible to deliver packets for the mobile node 100 via access point 104). In the mobile node 100 the same packets have their DA restored from IP3 to IP1, before they are delivered to the transport layer.

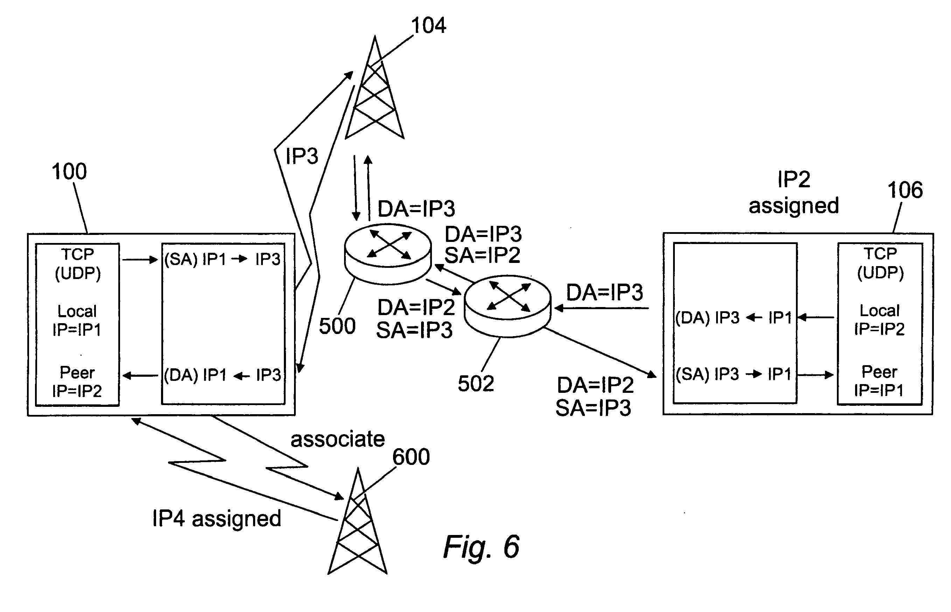

Referring now to figure 6, which shows the mobile node 100 moves to an area where coverage is better provided by wireless access point 600, belonging to a different IP subnet (with respect to the access point 104 subnet). The mobile node 100 decides to initiate the handover from access point 104 to access point 600, and the mobile node 100 associates with access point 600 in the new IP subnet. The mobile node 100 obtains IP address IP4 as a layer 3 address from the new IP subnet. The mobile node 100 still receives and transmits IP packets via access point 104, using the IP address IP3 layer 3 for that purpose.

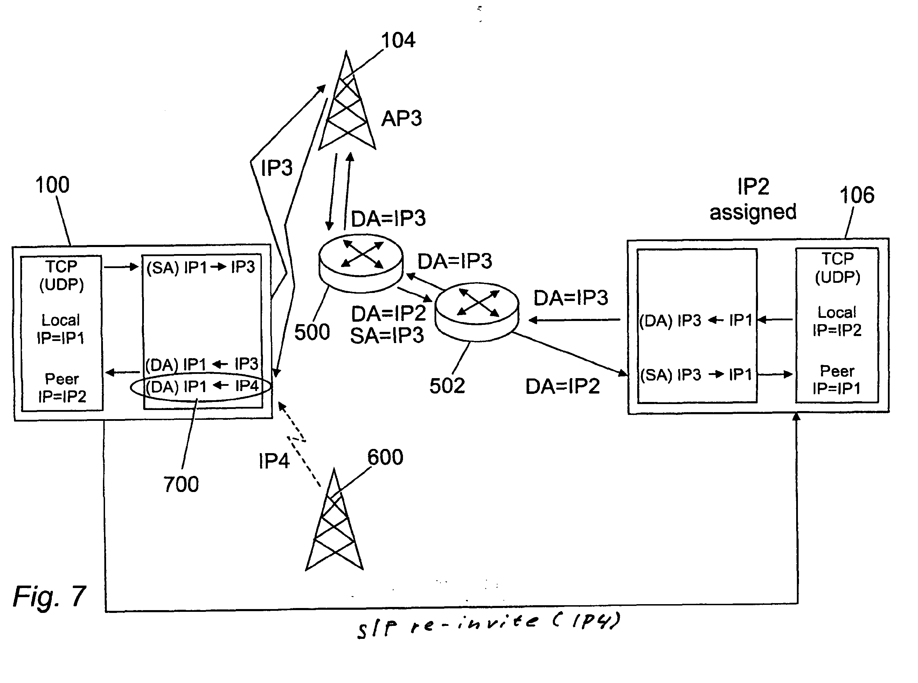

Referring now to figure 7, the operations carried out at the mobile node 100 to actually request the handover are now described. The mobile node 100 configures a new (additional) translation rule in a layer 3 handler associated therewith, as shown in circle 700. This new rule, as with all the rules defined for incoming packets, is applied to the IP packets before they are delivered to the transport layer.

The new rule is better defined in the following manner: Incoming IP packets having an SA=IP2 and a DA=IP4 are translated into IP packets having an SA=IP2 and a DA=IP1. The payload is substantially unaltered. It should be noted that the application of this rule may be delayed, since there are no packets arriving from IP address IP2 at the peer node 106, having a DA=IP4. Similarly, incoming IP packets having an SA=IP2 and a DA=IP3 (currently received by mobile node 100 from peer node 106) are still translated to IP packets having an SA=IP2 and a DA=IP1, before being delivered to the transport layer at the mobile node 100.

After adding the new rule in the layer 3 handler, the mobile node 100 informs the peer node 106 about the mobile node 100 IP address change (from IP3 to IP4). This notification is a request, to the peer node 106, to use IP address IP4 (instead of IP3) for the purpose of contacting the mobile node 100. The notification can take any appropriate form, for example an existing SIP request (re-invite), if SIP signalling is used between mobile node 100 and peer node 106, or by using proper signalling messages in the signalling system used between mobile node 100 and peer node 106.

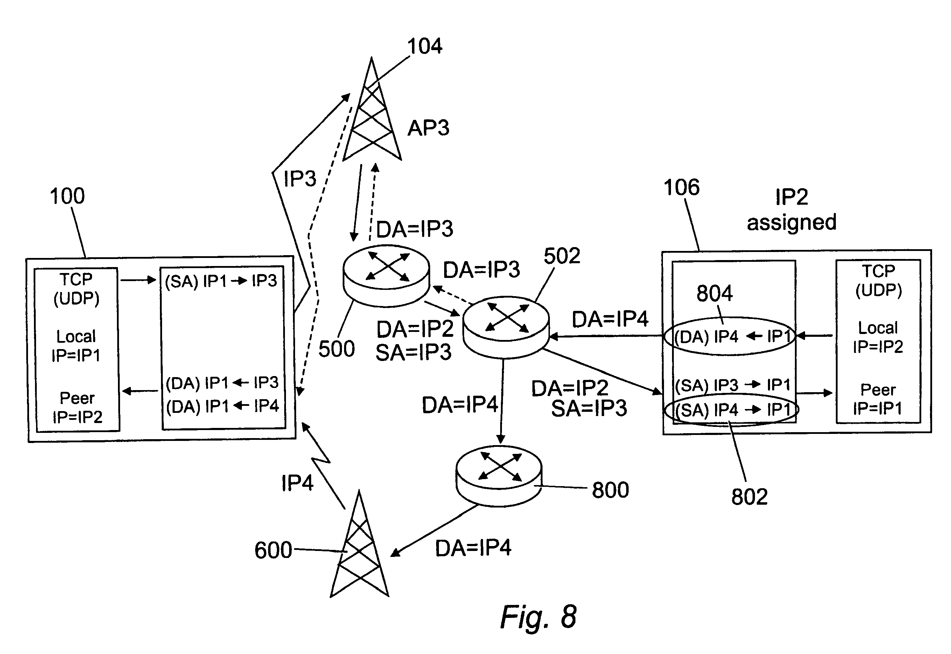

Figure 8 is now used to demonstrate what happens at the peer node 106 when the request from the mobile node 100 is received, to change the mobile node IP address. The peer node 106 configures a new (additional) translation rule in the Layer 3 handler as illustrated by circle 802 in figure 8. The new rule, as with all the rules defined for incoming packets, is applied to IP packets before they are delivered to the transport layer. The new rule is better defined as follows: Incoming IP packets having an SA=IP4 and a DA=IP2 are translated into IP packets having an SA=IP1 and a DA=IP2, before the packets are delivered to the transport layer at peer node106. The payload otherwise remains substantially unaltered.

Again the application of this rule may be delayed, since no packets are arriving that have an SA=IP4 (mobile node 100 is still transmitting packets having an SA=IP3). Similarly, incoming IP packets having an SA=IP3 are still translated to IP packets having an SA=IP1, before they are delivered to transport layer at peer node 106.

The peer node 106 changes the previous rule applied on packets coming from transport layer with IP1 as the destination address. The previous rule applied to those packets was that outgoing IP packets (originating from the local transport layer) having an SA=IP2 and a DA=IP1 are translated into IP packets having an SA=IP2 and a DA=IP3. Once again, the payload of the packets is substantially unaltered.

Following this, the previous rule is changed as will be described below. The outgoing IP packets (originating from local transport layer) having an SA=IP2 and a DA=IP1 are translated into IP packets having an SA=IP2 and a DA=IP4. Yet again, the payload of the packets is substantially unaltered. The new rule is highlighted by circle 804 in figure 8.

The outgoing IP packets (having the new destination address IP4) are routed to mobile node 100 via access point 600 by intermediate nodes or routers 502 and 800, instead of being routed via access point 104. This is automatically provided by an IP network routing process. Also, when the IP packets (having a DA=IP4) arrive at mobile node 100, the new rule previously configured at mobile node 100 on incoming packets (700 Figure 7) starts to be applied and the destination address is translated to IP address IP1 before packets are delivered to the transport layer. As a result, the transport layer sees no break in the incoming flow from IP2 to IP1. The last packet routed through access point 104 and the first packet routed through access point 600 both have their DA addresses translated to IP address IP1 (as with all other packets that are sent before or after the IP destination address change.). As a result, no packet loss is seen at the transport layer and the only degradation that may occur in packet delivery is a number of mis-ordered packets (if, for example, the new route is faster than the previous route).

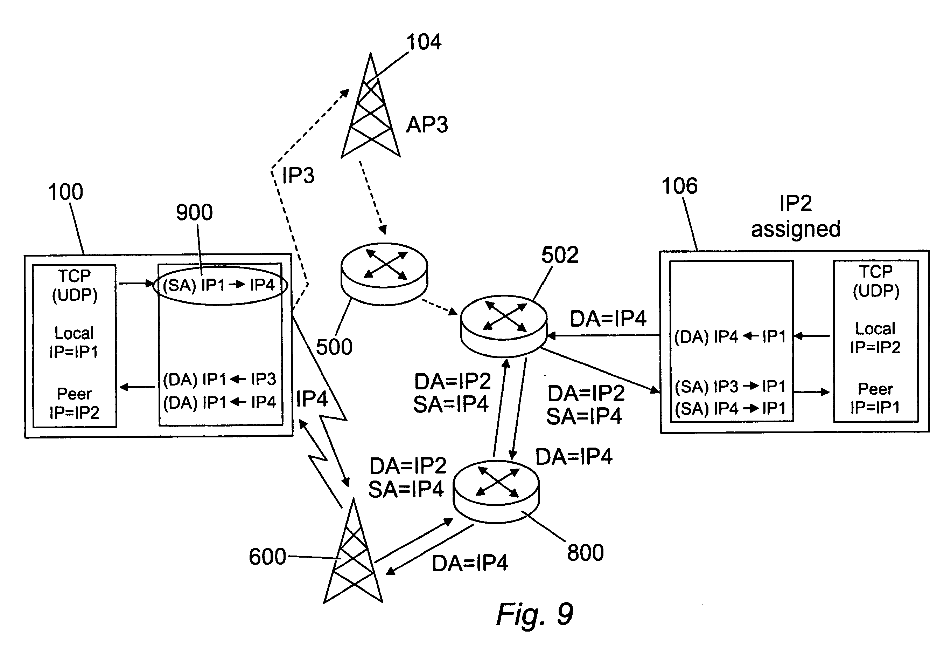

The mobile node 100 in Figure 8 continues to transmit packets via access point 104, although it receives packets from access point 600. In order for the handover to be completed, the mobile node 100 acts as described in Figure 9. Figure 9 shows the completion of the handover. When the mobile node 100 receives the first packets having a DA=IP4, it changes the previous rule applied to the packets coming from transport layer with IP1 as Source Address. The previous rule applied at those packets is that outgoing IP packets (originating from local transport layer) having an SA=IP1 and a DA=IP2 are translated into IP packets having an SA=IP3 and a DA=IP2. The payload remains substantially unaltered.

The previous rule is changed into the following: Outgoing IP packets (originating from local transport layer) having SA=IP1 and DA=IP2 are translated into IP packets having SA=IP4 and DA=IP2. Once again, the payload of the packet is substantially unaltered.

The new rule is highlighted by a circle 900 in Figure 9. When this new rule is applied, the outgoing IP packets will have an SA=IP4. Also, when these IP packets arrive at the peer node106, the new rule previously configured at peer node on incoming packets (802 in Figure 8) is then applied and the SA is translated to IP address IP1 before being delivered to the transport layer. As a result, the transport layer sees no break in the incoming flow from IP1 to IP2.

The mobile node 100, at this point, then starts sending the outgoing packets via the access point 600 air interface instead of sending them via access point 104 air interface. This completes the handover at the access point 600 and the new IP4 address is used in both directions instead of the previously used address for access point 104.

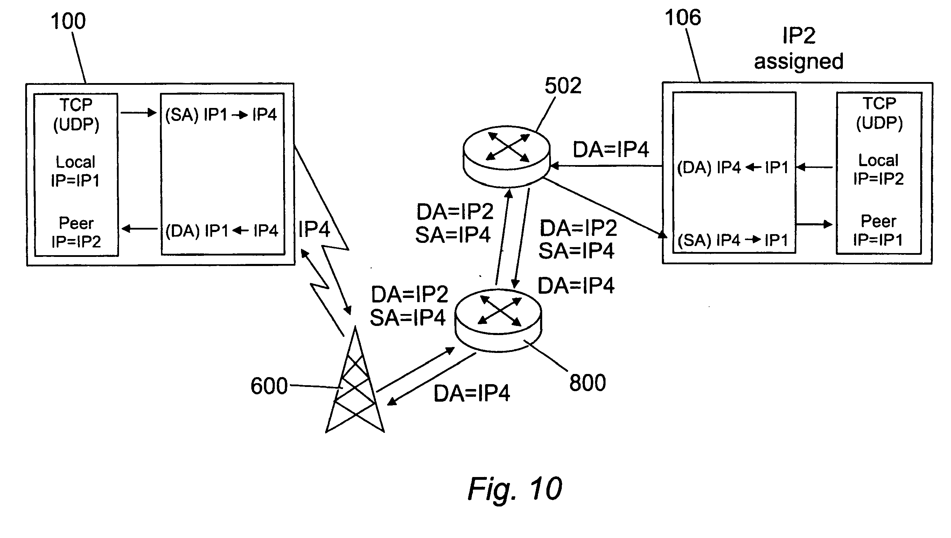

Any old or previously applied rules on incoming packets at both ends are no longer applied since there are no packets having an IP address IP3 (neither as SA nor as DA) which are transmitted between mobile node 100 and peer node106. After a predetermined time delay the old rule will get removed from layer 3 at both ends and the final picture after the handover (and the timeout of old rules) is shown in Figure 10.

It should be noted, that if a new session is established at this point between mobile node 100 and peer node 106, the new mobile node IP address (IP4) is used for the session termination at mobile node 100.

Where it is possible the establishment of new sessions should be avoided during the handover operation, i.e. from the initiation of the handover described in Figure 5 to the final handover position described in Figure 10

In the discussion above one node only (the mobile node 100) was considered to be a mobile node and the handover has been addressed with respect to the mobile node 100 side only. If the peer node 106 is also a mobile, the same mechanism can be applied to it. The same layer 3 functions shown in the figures can support mobility on both sides and each side can be addressed separately from a mobility point of view. A similar approach to that described above may apply to each or any node in the network.

The above discussion has been limited to IP address translation, however, translation can also occur at different ports for example, a UDP/TCP port. If the access point places restrictions on the UDP/TCP port that the mobile node 100 can use, the same mechanism described above for IP address translation can apply to the couple: (IP address, UDP/TCP port). This would result in the UDP/TCP port change being hidden from the transport layer, in addition to the IP address change.

If the peer node 106 is not capable of supporting mobility as described above, another node in the network can terminate the mobility on behalf of the peer node. This can happen, for example in a media gateway (MGW) where the sessions at the transport layer for the mobile node 100 are terminated and where these sessions provide the traffic for the peer node 106. However, in case of a network node terminating the mobility on behalf of the peer node 106, there is still a requirement for support from the network.

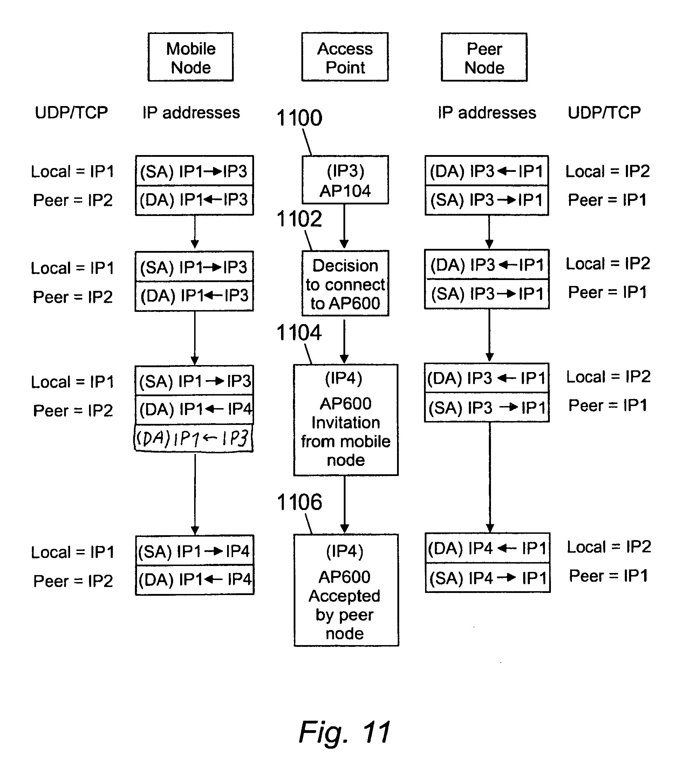

Referring now to figure 11, a flow chart of the changes that occur during a handover from one access point to another will now be described. The central portion of the flow chart shows the change of access point as follows. At step 1100 the access point 104 is connected to the mobile node and is operating with an IP address IP3. At step 1102 the decision to connect to a new access point 600 is made. At step 1104 an invitation is made from the mobile node to the peer node to transfer to access point 600 using an IP address IP4. At step 1106 the access point 600 and associated IP address IP4 are accepted by the peer node.

During this transition the mobile node 100 acts in the following way with respect to the UDP/TCP addressing and the IP addressing. Throughout the handover process the UDP/TCP address information remains the same in that the local address is always IP1 and the peer address is always IP2. On the other hand however, the IP addressing changes as follows. In step 1100 the source address of the mobile node is translated from IP1 to IP3 and the destination address is translated from IP3 to IP1. This remains the same at step 1102. However, at step 1104 the destination address is translated from both IP3 and IP4 to IP1. Finally in step 1106 the source address is also transferred from IP1 to IP4 and the destination address is translated from IP4 to IP1, without there being a need for a translation of the destination address from IP3 to IP1. In other words the UDP/TCP addressing remains the same even if the IP addressing is translated according to the access point used in the network.

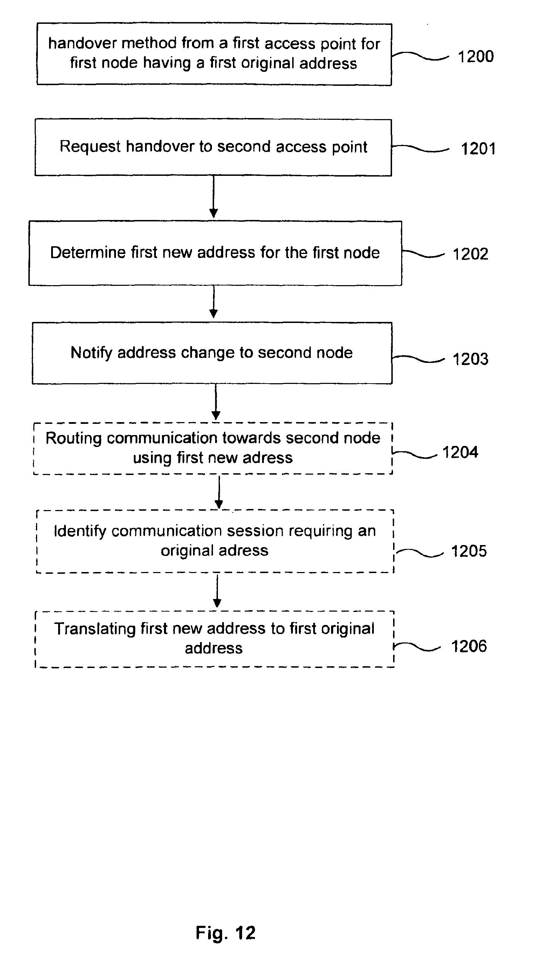

During the transition the peer node 106 acts in the following way with respect to the UDP/TCP addressing and the IP addressing. As with the mobile network, throughout the handover process the UDP/TCP address information remains the same. The local address is IP2 and the peer address is IP1. The IP addressing changes as follows. At step 1100 the destination address is converted from IP1 to IP3 and the source address is converted from IP3 to IP1. This remained the same in the peer node at both steps 1102 and 1104. However, at step 1106 the destination address is converted from IP1 to IP4 and the source address is converted from IP4 to IP1.
Referring now to figure 12 a flow chart diagram depicting a handover method 1200 in accordance with the teachings of the present invention will be described.

The handover method relates to a handover from a first access point to a second access point for a first node in communication with a second node. The first node has a first original address and the second node has a second original address, wherein the first and second nodes operate over a plurality of communication layers, and each communication layer supports one or more communication protocols.

The method is initiated with step 1201 in that a handover from the first access point to the second access point is requested for the communication, preferably by the first node. In response to the handover request a first new address is determined for the first node at step 1202. In response to the determination step the first node notifies the address change to the second node, in step 1203, such that second node is enabled to route the communication using the received first new address for one or more predetermined communication protocols. This may include translating the received first new address to the first original address or vice versa in step 1206.

Preferably the communication is routed to wards the second node using the first new address in step 1204, such that on reception of the communication the second node recognizes the first original address of the communication for the one or more predetermined communication protocols. Preferably the notification step 1203 for communicating the new address to the first or second node precedes the routing step 1204. Further preferably, the invented handover method includes an identification step 1205, for identifying one or more existing sessions in the communication between the first and second nodes which require an original address to operate wherein the translation step 1206 supports the one or more existing sessions.
Referring now to figure 12 a mobile node in accordance with the teachings of the present invention will be described. The mobile node is provided with a first original address and suitable for a communication with a second node having a second original address. The mobile node effects the communication via a first access point, wherein the first and second nodes operate over a plurality of communication layers, each communication layer supporting one or more communication protocols. The mobile node comprises a handover module 1301 for identifying a different access point and requesting transfer of the communication from the first access point to the different access point, wherein the different access point requires a first new address for the mobile node for effecting the communication. Furthermore the mobile node comprises a sender 1302 for notifying a change of address to the second node that enables the second node to route the communication using the first new address for one or more predetermined communication protocols. This may include translating the received first new address to the first original address or vice versa. Advantageously the mobile node also comprises a communication module 1304 for routing the communication using the first new address, such that on reception of the communication the second node recognizes the first original address of the communication for the one or more predetermined communication protocols.
Advantageously the mobile node further comprises a receiver 1303 for receiving from the second node a second new address for the second node and effecting the routing of the communication using the second new address, such that the communication module identifies the second original address of the communication and can translate the received second new address to the second original address for the one or more predetermined communication protocols.

The proposed solution allows a mobile node (or mobile terminal) to move across IP subnets boundaries, while still keeping communications established with other nodes. Although the IP address assigned to the mobile node changes (when the mobile node 100 moves from one IP subnet to another), the sessions established at the transport layer (and any other upper layers) are not affected by the change and they do not experience any packet loss.

The proposed solution is not limited to changing IP addresses and keeping the transport layer addresses unaffected. Instead, the proposed solution could change the addresses of layers other than the network layer, and maintain the addresses of layers other than the transport layer. Many variations can be foreseen in the different layers that exist both now and in the future.

The mobile node or mobile terminal (also referred to as the first node) can be of any appropriate type. For example, a mobile telephone, a PDA, a computer, or any other appropriate mobile communications device. Similarly, the peer node (also referred to as the second node) can be of any appropriate type as indicated above. Each node may include a handover module which can carry out some or all of the functions described with respect to mobility.

In the foregoing specification, the invention has been described with reference to specific examples of embodiments of the invention. It will, however, be evident that various modifications and changes may be made therein without departing from the broader spirit and scope of the invention as set forth in the appended claims. For example, the connections may be a type of connection suitable to transfer signals from or to the respective nodes, units or devices, for example via intermediate devices. Accordingly, unless implied or stated otherwise the connections may, for example, be direct connections or indirect connections.

Also, the invention is not limited to physical devices or units implemented in non-programmable hardware but can also be applied in programmable devices or units able to perform the desired device functions by operating in accordance with suitable program code. Furthermore, the devices may be physically distributed over a number of apparatus, while functionally operating as a single device.

Also, devices functionally forming separate devices may be integrated in a single physical device.

Similarly, other modifications, variations and alternatives are also possible. The specifications and drawings are, accordingly, to be regarded in an illustrative rather than in a restrictive sense.

The proposed solution does not require support from the network (except as specifically indicated above) and only end points participating in the established sessions, are required to support the function.

## Claims

1. A handover method (1200) from a first access point (102) to a second access point (104) for a first node (100) being a mobile node and having a first original address (IP1) in communication with a second node (106) having a second original address (IP2), wherein the first and second nodes (100; 106) operate over a plurality of communication layers, each communication layer supporting one or more communication protocols, **characterised in that** the method comprises:
- requesting a handover to the second access point (104) from the first access point (102) for the communication (1201);
- determining a new address (IP3; IP4) for the first node (100) based on the request for handover (1202);
- notifying a change of address to the second node that enables the second node to route the communication using the received new address for one or more predetermined communication protocols (1203);
- identifying one or more existing sessions in the communication between the first and second nodes which require an original address (IP1) to operate (1205);
- routing the communication using the new address (IP3; IP4), such that on reception of the communication the second node (106) recognizes the first original address (IP1) of the communication for the one or more predetermined communication protocols (1204), wherein the routing includes translating the first original address to the new address or vice versa (1206) for the said one or more existing sessions.

2. A handover method as claimed claim 1, further comprising determining a second new address for the second node and routing the communication using the second new address such that the first node recognizes the second original address of the communication and can translate the received second new address to the second original address for the one or more predetermined communication protocols.

3. A handover method as claimed in claim 1 or 2, further comprising translating the new address (IP3; IP4) to the original address (IP1) for any communication relating to the one or more predetermined communication protocols.

4. A handover method as claimed in the preceding claim, further comprising communicating a new address (IP3; IP4) to the first or second nodes, prior to routing the communication using the new address (IP3; IP4).

5. A handover method as claimed in claim 4, wherein the step of communicating the new address (IP3; IP4) further comprises communicating the original address (IP1).

6. A handover method as claimed in any preceding claim, further comprising identifying the one or more communication layers to which the one or more predetermined communication protocols belong and translating the new address (IP3; IP4) to the original address (IP1) or vice versa for all communications associated with the identified one or more communication layers.

7. A handover method as claimed in any preceding claim, further comprising providing the communication layers in the form of a physical layer, a data link layer, a network layer, a transport layer, and an application layer.

8. A handover method as claimed in claim 7, further comprising translating the new address (IP3; IP4) to the original address (IP1) for any communications in the transport layer.

9. A handover method as claimed in claim 7 or claim 8, further comprising using the new address for any communication in the network layer.

10. A first node (1300) being a mobile node and having a first original address and being connectable via a communication with a second node having a second original address, wherein the communication is effected via a first access point, wherein the first node and the second node are adapted to operate over a plurality of communication layers, each communication layer supporting one or more communication protocols, wherein the first node comprises a handover module (1301) for identifying a different access point and requesting transfer of the communication from the first access point to the different access point, wherein the different access point requires a new address for the first node for effecting the communication, a sender (1302) for notifying a change of address to the second node that enables the second node to route the communication using the new address for one or more predetermined communication protocols, and a communication module (1304) for routing the communication using the new address (IP3; IP4), such that on reception of the communication the second node (106) is adapted to recognize the first original address (IP1) of the communication for the one or more predetermined communication protocols and wherein the routing includes a translation of the new address to the first original address or vice versa, wherein the first node is adapted to identify one or more existing sessions in the communication between the first and second nodes, which sessions require an original address to operate and wherein the first node is adapted to translate any new address to the original address for the said one or more existing sessions.

11. The first node (1300) as claimed in claim 10, further comprising a receiver (1303) for receiving from the second node a second new address for the second node and effecting the routing of the communication using the second new address, such that the communication module (1304) is adapted to identify the second original address of the communication and is adapted to translate the received second new address to the second original address for the one or more predetermined communication protocols.

12. The first node (1300) as claimed in claim 10 or 11, wherein the first node is adapted to translate the new address to the original address for any communication relating to the one or more predetermined communication protocols.

13. The first node (1300) as claimed in any of the claims 10 to 12, wherein the first node is adapted to transmit the new address prior to routing the communication using the new address.

14. The first node (1300) as claimed in claim 13, wherein the first node is adapted to transmit the new address with the original address.

15. The first node (1300) as claimed in any of claims 10 to 14, wherein the first node is adapted to identify one or more communication layers used in the communication.

16. The first node (1300) as claimed in claim 15, wherein the one or more communication layers is associated with the one or more predetermined communication protocols and the first node is adapted to translate the new address to the original address or vice versa for all communications associated with the identified one or more communication layers.

17. The first node (1300) as claimed in any of claims 10 to 16, wherein the communication layers comprises a physical layer, a data link layer, a network layer, a transport layer, and an application layer.

18. The first node (1300) as claimed in claim 17, wherein the first node is adapted to translate the new address to the original address for any communications in the transport layer.

19. The first node (1300) as claimed in claim 17 or claim 18, wherein the first node is adapted to use the new address for any communication in the network layer.

## Patentansprüche

1. Übergabeverfahren (1200) von einem ersten Zugangspunkt (102) zu einem zweiten Zugangspunkt (104) für einen ersten Knoten (100), der ein mobiler Knoten ist und eine erste Ausgangsadresse (IP1) aufweist, in Kommunikation mit einem zweiten Knoten (106) mit einer zweiten Ausgangsadresse (IP2), wobei die ersten und zweiten Knoten (100; 106) über eine Mehrzahl von Kommunikationsschichten kommunizieren, wobei jede Kommunikationsschicht ein oder mehrere Kommunikationsprotokolle unterstützt, **dadurch gekennzeichnet, dass** das Verfahren umfasst:
- Anfordern einer Übergabe zum zweiten Zugangspunkt (104) vom ersten Zugangspunkt (102) für die Kommunikation (1201);
- Bestimmen einer neuen Adresse (IP3; IP4) für den ersten Knoten (100) basierend auf der Anforderung zur Übergabe (1202);
- Benachrichtigen des zweiten Knotens über eine Adressänderung, die es dem zweiten Knoten ermöglicht, die Kommunikation unter Verwendung der empfangenen neuen Adresse für ein oder mehrere vorbestimmte Kommunikationsprotokolle weiterzuleiten (1203);
- Identifizieren einer oder mehrerer bestehender Sitzungen in der Kommunikation zwischen den ersten und zweiten Knoten, welche eine Ausgangsadresse (IP1) benötigen, um zu funktionieren (1205);
- derartiges Weiterleiten der Kommunikation unter Verwendung der neuen Adresse (IP3; IP4), dass der zweite Knoten (106) bei Empfang der Kommunikation die erste Ausgangsadresse (IP1) der Kommunikation für das eine oder die mehreren vorbestimmten Kommunikationsprotokolle erkennt (1204), wobei die Weiterleitung ein Übersetzen der ersten Ausgangsadresse für die eine oder die mehreren bestehenden Sitzungen in die neue Adresse oder umgekehrt umfasst (1206).

2. Übergabeverfahren nach Anspruch 1, ferner umfassend ein Bestimmen einer zweiten neuen Adresse für den zweiten Knoten und derartiges Weiterleiten der Kommunikation unter Verwendung der zweiten neuen Adresse, dass der erste Knoten die zweite Ausgangsadresse der Kommunikation erkennt und die empfangene zweite neue Adresse für das eine oder die mehreren vorbestimmten Kommunikationsprotokolle in die zweite Ausgangsadresse übersetzen kann.

3. Übergabeverfahren nach Anspruch 1 oder 2, ferner umfassend ein Übersetzen der neuen Adresse (IP3; IP4) für jegliche Kommunikation in Bezug auf das eine oder die mehreren vorbestimmten Kommunikationsprotokolle in die Ausgangsadresse (IP1),

4. Übergabeverfahren nach dem vorhergehenden Anspruch, ferner umfassend ein Übertragen einer neuen Adresse (IP3; IP4) an die ersten oder zweiten Knoten vor dem Weiterleiten der Kommunikation unter Verwendung der neuen Adresse (IP3; IP4).

5. Übergabeverfahren nach Anspruch 4, wobei der Schritt des Übertragens der neuen Adresse (IP3; IP4) ferner ein Übertragen der Ausgangsadresse (IP1) umfasst.

6. Übergabeverfahren nach einem der vorhergehenden Ansprüche, ferner umfassend ein Identifizieren der einen oder der mehreren Kommunikationsschichten, zu welchen das eine oder die mehreren vorbestimmten Kommunikationsprotokolle gehören, und Übersetzen der neuen Adresse (IP3; IP4) für alle Kommunikationen, die der einen oder den mehreren identifizierten Kommunikationsschichten zugeordnet sind, in die Ausgangsadresse (IP1) oder umgekehrt.

7. Übergabeverfahren nach einem der vorhergehenden Ansprüche, ferner umfassend ein Bereitstellen der Kommunikationsschichten in Form einer physikalischen Schicht, einer Datensicherungsschicht, einer Netzwerkschicht, einer Transportschicht und einer Anwendungsschicht.

8. Übergabeverfahren nach Anspruch 7, ferner umfassend ein Übersetzen der neuen Adresse (IP3; IP4) für jegliche Kommunikation in der Transportschicht in die Ausgangsadresse (IP1).

9. Übergabeverfahren nach Anspruch 7 oder 8, ferner umfassend ein Verwenden der neuen Adresse für jegliche Kommunikation in der Netzwerkschicht.

10. Erster Knoten (1300), der ein mobiler Knoten ist und eine erste Ausgangsadresse aufweist und über eine Kommunikation mit einem zweiten Knoten mit einer zweiten Ausgangsadresse verbunden werden kann, wobei die Kommunikation über einen ersten Zugangspunkt erfolgt, wobei der erste Knoten und der zweiten Knoten so ausgelegt sind, dass sie über eine Mehrzahl von Kommunikationsschichten kommunizieren, wobei jede Kommunikationsschicht ein oder mehrere Kommunikationsprotokolle unterstützt, wobei der erste Knoten ein Übergabemodul (1301) zum Identifizieren eines anderen Zugangspunkts und Anfordern einer Übergabe der Kommunikation vom ersten Zugangspunkt zum anderen Zugangspunkt umfasst, wobei der andere Zugangspunkt eine neue Adresse für den ersten Knoten zum Durchführen der Kommunikation anfordert, einen Sender (1302) zum Benachrichtigen des zweiten Knotens über eine Adressänderung, die es dem zweiten Knoten ermöglicht, die Kommunikation unter Verwendung der neuen Adresse für ein oder mehrere vorbestimmte Kommunikationsprotokolle weiterzuleiten, und ein Kommunikationsmodul (1304) zum derartigen Weiterleiten der Kommunikation unter Verwendung der neuen Adresse (IP3; IP4) umfasst, dass der zweite Knoten (106) bei Empfang der Kommunikation in der Lage ist, die erste Ausgangsadresse (IP1) der Kommunikation für das eine oder die mehreren vorbestimmten Kommunikationsprotokolle zu erkennen, und wobei die Weiterleitung eine Übersetzung der neuen Adresse in die erste Ausgangsadresse und umgekehrt umfasst, wobei der erste Knoten so ausgelegt ist, dass er eine oder mehrere bestehende Sitzungen in der Kommunikation zwischen den ersten und zweiten Knoten identifiziert, welche Sitzungen eine Ausgangsadresse benötigen, um zu funktionieren, und wobei der erste Knoten so ausgelegt ist, dass er jegliche neue Adresse für die eine oder die mehreren bestehenden Sitzungen in die Ausgangsadresse übersetzt.

11. Erster Knoten (1300) nach Anspruch 10, ferner umfassend einen Empfänger (1303) zum Empfangen vom zweiten Knoten einer zweiten neuen Adresse für den zweiten Knoten und Durchführen des Weiterleitens der Kommunikation unter Verwendung der zweiten neuen Adresse derart, dass das Kommunikationsmodul (1304) in der Lage ist, die zweite Ausgangsadresse der Kommunikation zu identifizieren, und in der Lage ist, die empfangene zweite neue Adresse für das eine oder die mehreren vorbestimmten Kommunikationsprotokolle in die zweite Ausgangsadresse zu übersetzen.

12. Erster Knoten (1300) nach Anspruch 10 oder 11, wobei der erste Knoten so ausgelegt ist, dass er die neue Adresse für jegliche Kommunikation in Bezug auf das eine oder die mehreren Kommunikationsprotokolle in die Ausgangsadresse übersetzt.

13. Erster Knoten (1300) nach einem der Ansprüche 10 bis 12, wobei der erste Knoten so ausgelegt ist, dass er die neue Adresse vor dem Weiterleiten der Kommunikation unter Verwendung der neuen Adresse sendet.

14. Erster Knoten (1300) nach Anspruch 13, wobei der erste Knoten so ausgelegt ist, dass er die neue Adresse mit der Ausgangsadresse sendet.

15. Erster Knoten (1300) nach einem der Ansprüche 10 bis 14, wobei der erste Knoten so ausgelegt ist, dass er eine oder mehrere Kommunikationsschichten identifiziert, die in der Kommunikation verwendet werden.

16. Erster Knoten (1300) nach Anspruch 15, wobei den einen oder mehreren Kommunikationsschichten das eine oder die mehreren vorbestimmten Kommunikationsprotokolle zugeordnet sind, und der erste Knoten so ausgelegt ist, dass er die neue Adresse für alle Kommunikationen, die der einen oder den mehreren identifizierten Kommunikationsschichten zugeordnet sind, in die Ausgangsadresse übersetzt oder umgekehrt.

17. Erster Knoten (1300) nach einem der Ansprüche 10 bis 16, wobei die Kommunikationsschichten eine physikalische Schicht, eine Datensicherungsschicht, eine Netzwerkschicht, eine Transportschicht und eine Anwendungsschicht umfassen.

18. Erster Knoten (1300) nach Anspruch 17, wobei der erste Knoten so ausgelegt ist, dass er die neue Adresse für jegliche Kommunikation in der Transportschicht in die Ausgangsadresse übersetzt.

19. Erster Knoten (1300) nach Anspruch 17 oder 18, wobei der erste Knoten so ausgelegt ist, dass er die neue Adresse für jegliche Kommunikation in der Netzwerkschicht verwendet.

## Revendications

1. Procédé de transfert (1200) d'un premier point d'accès (102) à un second point d'accès (104) pour un premier noeud (100) étant un noeud mobile et ayant une première adresse d'origine (IP1) en communication avec un second noeud (106) ayant une seconde adresse d'origine (IP2), dans lequel le premier et le second noeuds (100 ; 106) fonctionnent sur une pluralité de couches de communication, chaque couche de communication supportant un ou des protocoles de communication, **caractérisé en ce que** le procédé comprend de :
- demander un transfert vers le second point d'accès (104) depuis le premier point d'accès (102) pour la communication (1201) ;
- déterminer une nouvelle adresse (IP3 ; IP4) pour le premier noeud (100) sur la base de la demande de transfert (1202) ;
- notifier un changement d'adresse au second noeud qui permet au second noeud de router la communication en utilisant la nouvelle adresse reçue pour un ou plusieurs protocoles de communication prédéterminés (7.203) ;
- identifier une ou plusieurs sessions existantes dans la communication entre le premier et le second noeud qui requièrent une adresse d'origine (IP1) pour fonctionner (1205) ;
- router la communication en utilisant la nouvelle adresse (IP3 ; IP4) de sorte que à la réception de la communication le second noeud (106) reconnaisse la première adresse d'origine (IP1) de la communication pour un ou plusieurs protocoles de communication prédéterminés (1204), dans lequel le routage inclut de traduire la première adresse d'origine en la nouvelle adresse ou vice versa (1206) pour lesdites une ou plusieurs sessions existantes.

2. Procédé de transfert selon la revendication 1, comprenant en outre de déterminer une seconde nouvelle adresse pour le second noeud et de router la communication en utilisant la seconde nouvelle adresse de sorte que le premier noeud reconnaisse la seconde adresse d'origine de la communication et puisse traduire la seconde nouvelle adresse reçue en la seconde adresse d'origine pour le ou les protocoles de communication prédéterminés.

3. Procédé de transfert selon la revendication 1 ou 2, comprenant en outre de traduire la nouvelle adresse (IP3 ; IP4) en l'adresse d'origine (IP1) pour n'importe quelle communication se rapportant à un ou plusieurs protocoles de communication prédéterminés.

4. Procédé de transfert selon la revendication précédentes, comprenant en outre de communiquer une nouvelle adresse (IP3 ; IP4) au premier ou second noeud, avant de router la communication en utilisant la nouvelle adresse (IP3 ; IP4).

5. Procédé de transfert selon la revendication 4, dans lequel l'étape de communication de la nouvelle adresse (IP3 ; IP4) comprend en outre de communiquer l'adresse d'origine (IP1).

6. Procédé de transfert selon une quelconque des revendications précédentes, comprenant en outre d'identifier la ou les couches de communication auxquelles appartiennent le ou les protocoles de communication prédéterminés et de traduire la nouvelle adresse (IP3 ; IP4) en l'adresse d'origine (IP1) ou vive versa pour toutes les communications associées à la ou les couches de communication identifiées.

7. Procédé de transfert selon une quelconque des revendications précédentes, comprenant en outre de fournir les couches de communication sous la forme d'une couche physique, une couche de liaison de données, une couche de réseau, une couche de transport et une couche d'application.

8. Procédé de transfert selon la revendication 7, comprenant en outre de traduire la nouvelle adresse (IP3 ; IP4) en l'adresse d'origine (IP1) pour n'importe quelle communication dans la couche de transport.

9. Procédé de transfert selon la revendication 7 ou 8, comprenant en outre d'utiliser la nouvelle adresse pour n'importe quelle communication dans la couche de réseau.

10. Premier noeud (1300) étant un noeud mobile et ayant une première adresse d'origine et pouvant être connecté via une communication avec un second noeud ayant une seconde adresse d'origine, dans lequel la communication est effectuée via un premier point d'accès, dans lequel le premier noeud et le second noeud sont adaptés pour fonctionner sur une pluralité de couches de communication, chaque couche de communication supportant un ou plusieurs protocoles de communication, dans lequel le premier noeud comprend un module de transfert (1301) pour identifier un point d'accès différent et demander un transfert de la communication du premier point d'accès au point d'accès différent, dans lequel le point d'accès différent requiert une nouvelle adresse pour le premier noeud pour effectuer la communication, un émetteur (1302) pour notifier un changement d'adresse au second noeud qui permet au second noeud de router la communication en utilisant la nouvelle adresse pour un ou des protocoles de communication prédéterminés, et un module de communication (1304) pour router la communication en utilisant la nouvelle adresse (IP3 ; IP4), de sorte que à la réception de la communication le second noeud (106) soit adapté pour reconnaître la première adresse d'origine (IP1) de la communication pour le ou les protocoles de communication prédéterminés et dans lequel le routage inclut une traduction de la nouvelle adresse en la première adresse d'origine ou vive versa, dans lequel le premier noeud est adapté pour identifier une ou plusieurs sessions existantes dans la communication entre le premier et le second noeud, lesquelles sessions requièrent une adresse d'origine pour fonctionner et dans lequel le premier noeud est adapté pour traduire n'importe quelle nouvelle adresse en l'adresse d'origine pour lesdites une ou plusieurs sessions existantes.

11. Premier noeud (1300) selon la revendication 10, comprenant en outre un récepteur (1303) pour recevoir depuis le second noeud une seconde nouvelle adresse pour le second noeud et effectuer le routage de la communication en utilisant la seconde nouvelle adresse, de sorte que le module de communication (1304) soit adapté pour identifier la seconde adresse d'origine de la communication et soit adapté pour traduire la seconde nouvelle adresse reçue en la seconde adresse d'origine pour le ou les protocoles de communication prédéterminés.

12. Premier noeud (1300) selon la revendication 10 ou 11, dans lequel le premier noeud est adapté pour traduire la nouvelle adresse en l'adresse d'origine pour n'importe quelle communication se rapportant à un ou plusieurs protocoles de communication prédéterminés.

13. Premier noeud (1300) selon une quelconque des revendications 10 à 12, dans lequel le premier noeud est adapté pour transmettre la nouvelle adresse avant la routage de la communication en utilisant la nouvelle adresse.

14. Premier noeud (1300) selon la revendication 13, dans lequel le premier noeud est adapté pour transmettre la nouvelle adresse avec l'adresse d'origine.

15. Premier noeud (1300) selon une quelconque des revendications 10 à 14, dans lequel le premier noeud est adapté pour identifier une ou plusieurs couches de communication utilisées pendant la communication.

16. Premier noeud (1300) selon la revendication 15, dans lequel la ou les couches de communication sont associées à le ou les protocoles de communication prédéterminés et le premier noeud est adapté pour traduire la nouvelle adresse en l'adresse d'origine ou vice versa pour toutes les communications associées à la ou les couches de communication identifiées.

17. Premier noeud (1300) selon une quelconque des revendications 10 à 16, dans lequel les couches de communication comprennent une couche physique, une couche de liaison de données, une couche de réseau, une couche de transport et une couche d'application.

18. Premier noeud (1300) selon la revendication 17, dans
lequel le premier noeud est adapté pour traduire la nouvelle adresse en l'adresse d'origine pour n'importe quelle communication dans la couche de transport.

19. Premier noeud (1300) selon la revendication 17 ou 18, dans lequel le premier noeud est adapté pour utiliser la nouvelle adresse pour n'importe quelle communication dans la couche de réseau.
